(19) Europäisches Patentamt
European Patent Office
Office européen des brevets

(11) **EP 3 276 370 A1**

(12) **EUROPEAN PATENT APPLICATION**

(43) Date of publication:
**31.01.2018 Bulletin 2018/05**

(51) Int Cl.:
*G01S 5/02* (2010.01)    *G01S 11/02* (2010.01)

(21) Application number: **17182100.2**

(22) Date of filing: **19.07.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (72) Inventors:<br>• **GILBERTON, Philippe**<br>  **35576 CESSON SEVIGNE (FR)**<br>• **LEGALLAIS, Yvon**<br>  **35576 CESSON SEVIGNE (FR)**<br>• **LOUZIR, Ali**<br>  **35576 CESSON SEVIGNE (FR)** |
| (30) Priority: **26.07.2016 EP 16305965** | (74) Representative: **Huchet, Anne**<br>**TECHNICOLOR**<br>**1-5, rue Jeanne d'Arc**<br>**92130 Issy-les-Moulineaux (FR)** |
| (71) Applicant: **Thomson Licensing**<br>**92130 Issy-les-Moulineaux (FR)** | |

(54) **METHOD AND APPARATUS FOR DETECTING MOTION ACTIVITY**

(57)    A method and an apparatus for detecting motion activity of an object are suggested. The apparatus comprises: an RSSI detecting unit for obtaining the RSSI values of wireless signals; a first calculating unit for calculating a first indication relating to the status of movement/stillness of an object as a function of the Standard Deviation (STDEV) value of the RSSI values of the wireless signals over a first threshold; a second calculating unit for calculating a second indication relating to the speed of movement of the object as a function of the number of times that the RSSI values cross a second threshold from down to up during a time period; and a combining unit for outputting a third indication of the motion activity of the object by combining the first and the second indications.

WiFi signal

Fig. 13

**EP 3 276 370 A1**

## Description

## TECHNICAL FIELD

The present disclosure relates to a method and an apparatus for detecting motion activity.

## BACKGROUND

This section is intended to provide a background to the various embodiments of the technology described in this disclosure. The description in this section may include concepts that could be pursued, but are not necessarily ones that have been previously conceived or pursued. Therefore, unless otherwise indicated herein, what is described in this section is not prior art to the description and/or claims of this disclosure and is not admitted to be prior art by the mere inclusion in this section.

In some cases, there is a need to detect the motion activity of a subject. For example, the above-mentioned subject can be a person. The result of the detection can be used in childcare, health care, home security, or smart home application. An exemplary context is that the motion activity of a person in a room is detected and then corresponding service is provided according to the detected motion activity.

A motion activity can be monitored and recognized by kinetic sensors which are carried by the person. Some known solutions use kinetic sensors equipped in a smartphone or a wearable device of the person to detect the motion activity. However, in some cases one or more such sensors are not available for the detection of the motion activity. For example, the motion sensors of a smartphone are useless for the purpose of motion activity detection when it is placed on a table, instead of being carried by the person to be detected. Therefore, there is a need for a motion activity detection without using a specific sensor.

Some non-intrusive solutions are proposed, which do not use dedicated sensors carried by the subject to be detected (for example, the above-mentioned kinetic sensors) for detecting the motion activity of the subject. Such non-intrusive solutions can be based on the analysis of RF (radio Frequency) signals, for example, WiFi signals which are popular wireless means available in many household, between an access point and a user device in the detected area where the subject locates. For example, a parameter used for the analysis of a RF signal is the RSSI (Received Signal Strength Information) which can be used to monitor the area where the subject is located. In the example of a WiFi signal being considered as RF sensing means, the RSSI has the advantage to be accessible in every smartphone for discovering, sensing and connecting to the WiFi access points surrounding the subject. A specific context might be a home gateway being used as a RF source to allow the detection of indoor motion activities of a person based on the signals received from a mobile phone in the same room as the person. In this case, the RSSI of the WiFi signal of the access point which is regularly turned on for example in a residential gateway can be detected by an RF sensor integrated in a mobile device.

Since the above-mentioned RF means are normally available within a household, no extra RF devices are needed for the detection of motion activity, which allows a non-intrusive activity sensing. However, known solutions requires improvement in term of performance.

## SUMMARY

The present disclosure will be described in detail with reference to exemplary embodiments. However, the present disclosure is not limited to the exemplary embodiments.

According to a first aspect of the present invention disclosure, there is provided a method, comprising, at the level of a mobile device: outputting an indication relating to a motion activity of an object as a function of the RSSI values of wireless signals transmitted from an access point to the mobile device.

In an embodiment, the method further comprises: obtaining the RSSI values of said wireless signals; calculating a first indication relating to the status of movement/stillness of an object as a function of the Standard Deviation (STDEV) value of the RSSI values of the wireless signals over a first threshold; calculating a second indication relating to the speed of movement of the object as a function of the number of times that the RSSI values cross a second threshold from down to up during a time period; and outputting the indication relating to the motion activity by combining the first indication and the second indication.

In an embodiment, the wireless signals are in conformity with the WiFi standard.

In an embodiment, the wireless signals are beacon frames transmitted by the access point.

In an embodiment, the method further comprises transmitting a message to the access point to adapt the beaconing period as a function of the variation of said number of times and the variation of STDEV of the RSSI values.

In an embodiment, the method further comprises receiving the wireless signals from a path which is intercepted by the object and a path which is not intercepted by the object.

According to a second aspect of the present invention disclosure, there is provided an apparatus, comprising: an RSSI detecting unit for obtaining the RSSI values of wireless signals; a first calculating unit for calculating a first indication relating to the status of movement/stillness of an object as a function of the Standard Deviation (STDEV) value of the RSSI values of the wireless signals over a first threshold; a second calculating unit for calculating a second indication relating to the speed of movement of the object as a function of the number of times that the RSSI values cross a second threshold from down to up during a time period; and a combining unit for outputting a third indication of the motion activity of the object by combining the first and the second indications.

In an embodiment, the wireless signals are in conformity with the WiFi standard.

In an embodiment, the wireless signals are beacon frames transmitted by an access point.

In an embodiment, the apparatus further comprises a communicating unit for transmitting a message to the access point to adapt the beaconing period as a function of the variation of said number of times and the variation of STDEV of the RSSI values.

According to a third aspect of the present disclosure, there is provided a computer program product downloadable from a communication network and/or recorded on a medium readable by computer and/or executable by a processor, comprising program code instructions for implementing the steps of a method according to the first aspect of the disclosure.

According to a fourth aspect of the present disclosure, there is provided Non-transitory computer-readable medium comprising a computer program product recorded thereon and capable of being run by a processor, including program code instructions for implementing the steps of a method according to the first aspect of the disclosure.

## BRIEF DESCRIPTION OF THE DRAWINGS

The above and other objects, features, and advantages of the present disclosure will become apparent from the following descriptions on embodiments of the present disclosure with reference to the drawings, in which:

Figure 1 is an exemplary diagram of configuration of motion activity detection based the RSSI monitoring of WiFi signals generated by a gateway and received by a mobile device according to an embodiment of the present disclosure;

Figure 2 is an exemplary diagram showing the measurement result of RSSI values captured over time when the WiFi AP and the RSSI monitoring device are in the same room (the first floor) and a person to be detected is not moving;

Figure 3 is an exemplary diagram showing the measurement result of RSSI values captured over time when the WiFi AP and the RSSI monitoring device are in the same room (the first floor) and a person to be detected is walking slowly;

Figure 4 is an exemplary diagram showing the measurement result of RSSI values captured over time in the first floor when the WiFi AP and the RSSI monitoring device are in the same room (the first floor) and a person to be detected is walking fast;

Figure 5 is an exemplary diagram showing the multipath propagation of a WiFi signal and how it is affected by a person movement;

Figure 6 is an exemplary diagram showing the measurement result of RSSI values over time in the second floor when the WiFi AP and the RSSI monitoring device are in different rooms and a person to be detected is not moving;

Figure 7 is an exemplary diagram showing the measurement result of RSSI values over time in the second floor when the WiFi AP and the RSSI monitoring device are in different rooms and a person to be detected is walking slowly (Figure 8(a)) and fast (Figure 8(b));

Figure 8 is an exemplary diagram showing STandard DEViation (STDEV) of RSSI over time when a person to be detected is in sit still activity (no motion);

Figure 9 is an exemplary diagram showing STDEV of RSSI over time when a person to be detected is moving;

Figure 10 is a flowchart of a process for detecting a motion activity according to an embodiment of the present disclosure;

Figure 11 is an exemplary diagram showing the process for calculating the periodicity value;

Figure 12 is an exemplary diagram showing a motion activity detection implemented on a mobile device according to an embodiment of the present disclosure; and

Figure 13 is an exemplary block diagram showing an apparatus for detecting a motion activity according to an embodiment of the present disclosure.

## DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

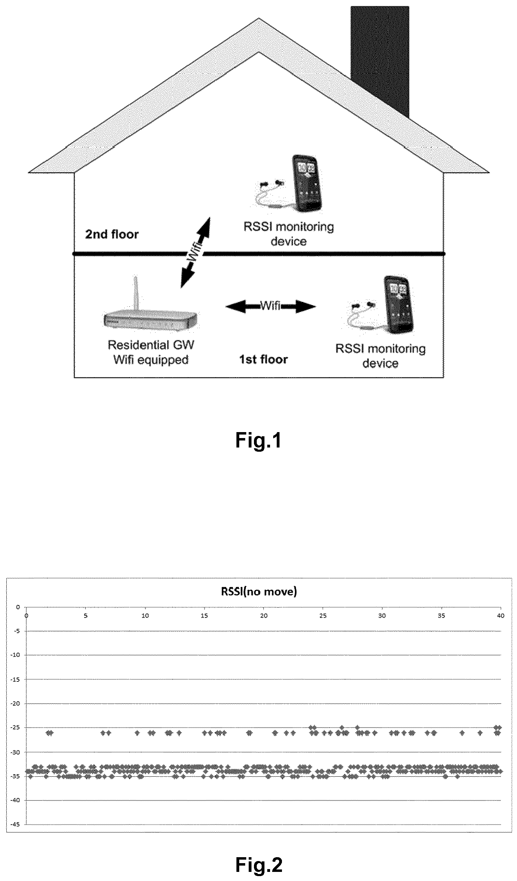

Figure 1 is an exemplary diagram of configuration of motion activity detection based on the RSSI monitoring of WiFi signals generated by a gateway and received by a mobile device according to an embodiment of the present disclosure. As shown in Figure 1, the motion activity detection takes place in a two-story house. A residential gateway that embeds the WiFi Access Point (AP) is placed in the first floor. Two RSSI monitoring devices are placed in the first and the second floors respectively, to detect the RSSI of the WiFi signals generated by the gateway, based on which the motion activity of a person in the house is detected. The RSSI monitoring device in Figure 1 can be a mobile phone device.

Next, measurement results of the RSSI values of the WiFi signals will be shown to illustrate that the motion detection and its speed can be detected by analyzing the RSSI and its fluctuation over time. Known WiFi monitoring tools can be used for the measurement, for example, the Microsoft Network Monitor 3.4. As illustrated in Figure 1, the measurement can take place in the first floor and second floor by the RSSI monitoring devices.

The measurements can be performed closed to the WiFi AP and refer to a Rician propagation model, which means that a main path is dominant over secondary paths. The main path means the direct Radio frequency (RF) path without any reflection on the wall and a secondary path means a RF path with a reflection on a wall.

This is the typical case for the measurement performed in the first floor because the object to sense is in the close vicinity of the WiFi AP and intercepts the dominant path when it was moving. Those measurement results can be extracted from the management frames received by the RSSI monitoring device which are transmitted each time the access point is beaconing. In a WiFi network, access points periodically send beacons in a broadcast way without targeted IP address of device in particular. The beacon frame, which is a particular frame type of management frame(see standard IEEE 802.11), can be compared to the "heartbeat" of a wireless LAN, enabling stations (in the example of Figure 1 the station is located in the gateway considered as the Access Point) to establish and maintain communications in an orderly fashion. The beacon interval can be set through the access point configuration settings. In an example, the beacon interval can be set to 100ms, which provides a good performance in terms of responsiveness and overhead. The typical range of beacon interval can be adjusted from 10 to 65535 (expressed in ms).

Figures 2-4 are exemplary diagrams showing the measurement results of RSSI values over time in different cases. In Figures 2-4, the horizontal axis is the time expressed in second and vertical axis shows the RSSI values expressed in dB. The arrows of these diagrams show the abrupt changes of RSSI values.

Figure 2 is an exemplary diagram showing the measurement result of RSSI values captured over time when the WiFi AP and the RSSI monitoring device are in the same room (the first floor) and a person to be detected is not moving.

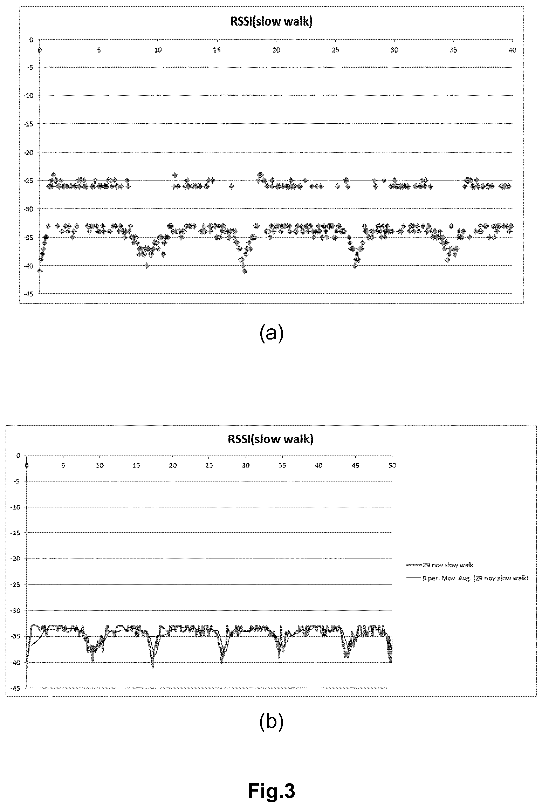

Figure 3 is an exemplary diagram showing the measurement result of RSSI values captured over time when the WiFi AP and the RSSI monitoring device are in the same room (the first floor) and a person to be detected is walking slowly. Figure 3(a) shows the raw RSSI values and Figure 3(b) shows the averaged RSSI values.

Figures 2 and 3 show clearly the difference of fluctuation of the RSSI values between the case when the person is walking and that when the person is not walking.

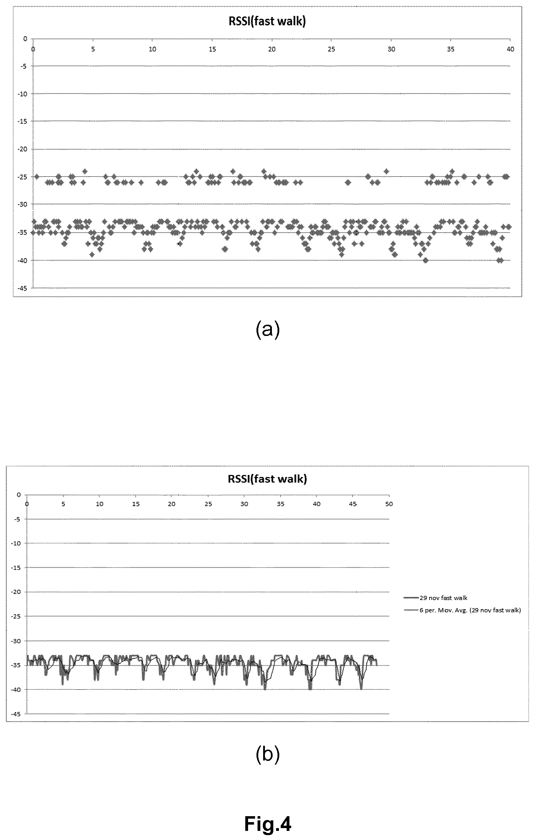

Figure 4 is an exemplary diagram showing the measurement result of RSSI values captured over time when the WiFi AP and the RSSI monitoring device are in the same room (the first floor) and a person to be detected is walking fast. Figure 4(a) shows the raw RSSI values and Figure 4(b) shows the averaged RSSI values.

By comparing Figures 3 and 4 which have the same timescale (ranging from 0 to 50 seconds), it can be seen that there are a larger number of arrows in Figure 4 than in Figure 3, which means that in the case shown in Figure 4 the person is walking quicker. The quicker the person is walking the more it disturbs the signal, from which we can see the relationship between the speed and the RSSI values.

The measurement results show that in filtering the RSSI values, not only the detection of the activity within indoor area is feasible, but also different activities could be discriminated. For this example the motion speed is clearly demonstrated as it appears that the RSSI curve shows a "periodicity" that increases according to the walk speed. The filtering is a combination of temporal window adjustment and thresholds level that could be optimized to better show up the motion recurrence.

Hereafter is explained how those indoor multipath combinations impact the RSSI value.

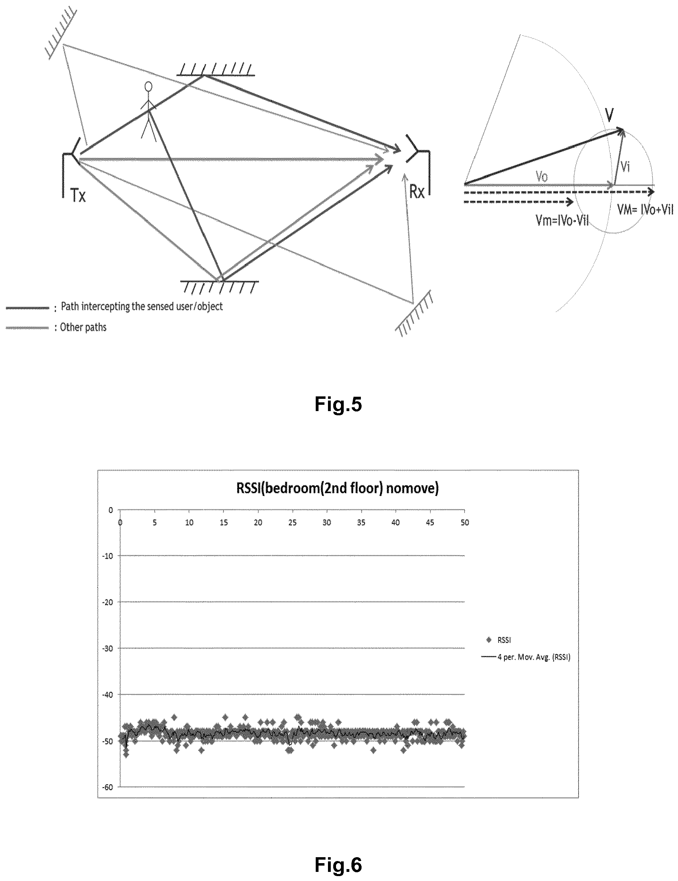

Figure 5 is an exemplary diagram showing the multipath propagation of a WiFi signal and how it is affected by the movement of a person.

As shown in Figure 5, in a typical indoor environment, the transmitted signal propagates from the transmitter, i.e. the gateway, to the receiver, i.e. a monitoring device, through multiple paths. Therefore, the received signal is a vector combination (i.e. combination in amplitude and phase) of these paths which gives rise to the so called multipath frequency selective fading. In Figure 5, for the WiFi signals received by the RSSI monitoring device, the paths that intercept a person or an object to be sensed are distinguished from the other paths. Figure 5 shows exemplary paths which are intercepted by the moving person and those which are not intercepted (not impacted by person motion). A dominant path has the main contribution in the vector combination (and usually it is the direct one but not always). We notice:

$V_i$: The vector combination at the receiver side of the paths that intercept the sensed person/object

$V_o$: The vector combination of all other paths that reach the receiver

The total received signal V:

$$V = V_i + V_o$$

When the person/object moves, mainly the phase of Vi changes with respect to $V_o$ and the RSSI value fluctuates between the 2 extreme absolute values of $VM=|V_o + V_i|$ (in-phase combination) and $V_m=|V_o - V_i|$ (out of phase combination).

Therefore, two findings are obtained:

1) The RSSI extreme values depend on the ratio R between the power in the paths intercepted by the person/object to sense and the power in the other paths. That is $R = |V_i/V_o|$. Closer R to 1 larger is the RSSI fluctuations and easier is the activity detection.

2) The dynamics of the activity of the person/object to sense is reflected in the time variations of the RSSI.

To illustrate those vector combinations in the context of motion activity detection of human being, several examples of typical human motion speed activity such as walk or arm rotation are considered.

Regular walk speed of human being is 1.4 m/s and the walk speed can range from 1 to 3 m/s. In a computer game using smartphones such as a virtual sword like swordfight game, the considered motion gamer speed ranges from 0.5 m/s to 2 m/s. More details of the motion gamer speed can be found in the reference entitled "Mobile Motion Gaming: Enabling a New Class of Phone-to-Phone Action Games on Commodity Phones", Zengbin Zhang, David Chu, Xiaomeng Chen and Thomas Moscibroda, Mobile Computing August 2013.

For arm motion the speed could be significantly higher, the following is a specific example: Human arm size is 1 m, speed rotation for a human is 1 rotation per second corresponding to 2*pi rad/s.

That gives a circle perimeter performed by the extremity of the human arm during 1 rotation of around 6 m, which means that the covered distance could be 4 to 6 times higher between walking and arm rotating activities which increase (over for example an one second temporal window for each activity to discriminate) the angular speed of Vi multipath combinations.

In order to discriminate such motion variation over the RSSI analysis, the beacon interval occurrence can be increased for example by 5 in reducing the beaconing time interval from 100 ms to 20 ms.

To strengthen the measurement condition, complementary measurements can be performed in referring to a Rayleigh propagation model, which means that the dominant path is much less contributing. Those propagation conditions occurred in the 2nd floor of the house where the direct path is attenuated and the secondary paths are highlighted:

Figure 6 is an exemplary diagram showing the measurement result of RSSI values over time in the second floor when the WiFi AP and the RSSI monitoring device are in different rooms and a person to be detected is not moving. In Figure 6, the horizontal axis is expressed in second and vertical axis is expressed in dB. The arrows show the abrupt changes of RSSI values. Figure 6 shows the raw and averaged RSSI values.

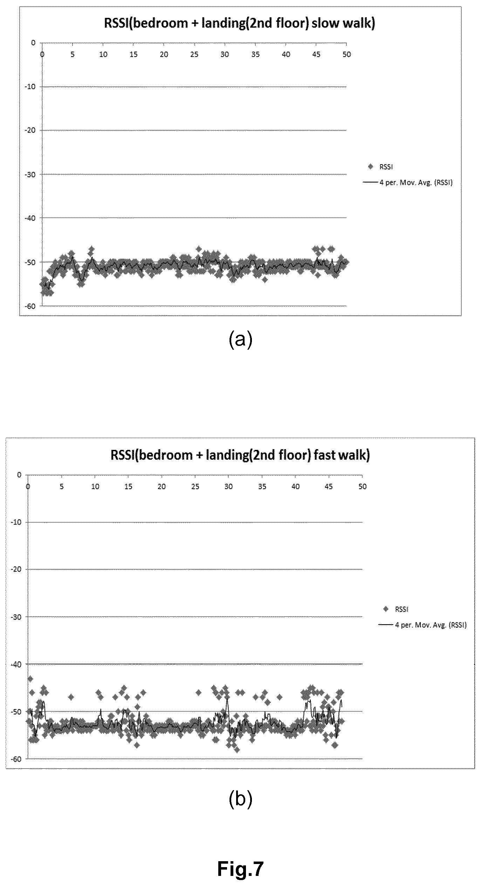

Figure 7 is an exemplary diagram showing the measurement result of RSSI values over time in the second floor when the WiFi AP and the RSSI monitoring device are in different rooms and a person to be detected is walking slowly (Figure 7(a)) and fast (Figure 7(b)). In Figure 7, the horizontal axis is expressed in second and vertical axis is expressed in dB. Figure 7 shows the raw and averaged RSSI values.

As shown in Figures 6 and 7, the activity speed could be detected in averaging the RSSI values even in a Rayleigh propagation conditions providing a respectable ratio R=Vi/Vo is insured.

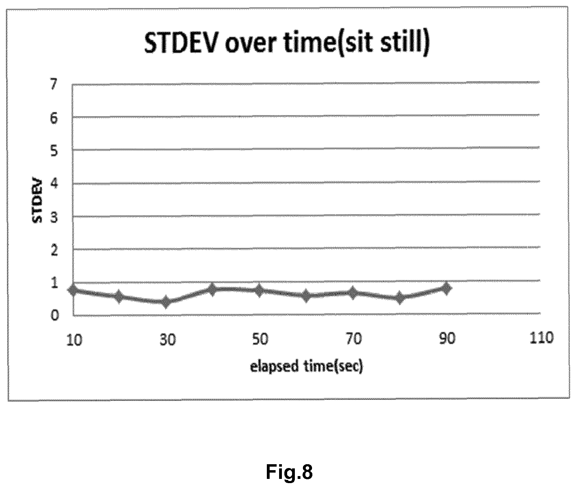

Figure 8 is an exemplary diagram showing STandard DEViation (STDEV) of RSSI over time when a person to be detected is in sit still activity (no motion). As shown in Figure 8, another RSSI processing could be provided by analyzing STDEV of RSSI.

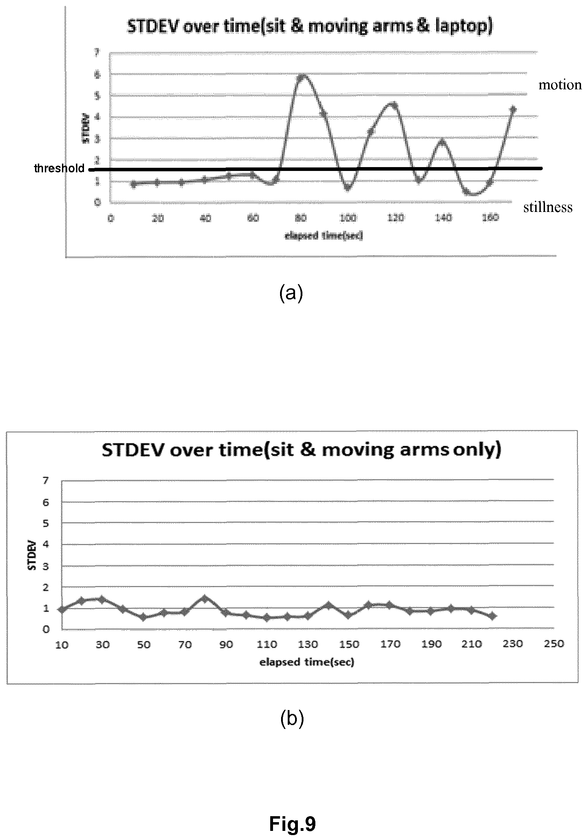

Figure 9 is an exemplary diagram showing STDEV of RSSI over time when a person to be detected is moving. Figure 9(a) shows STDEV of RSSI over time when a person to be detected was sitting & moving arms & laptop. Figure 9(b) shows STDEV of RSSI over time when a person to be detected was sitting & moving arms only. In the case shown by Figure 9(a), the arms and the laptop are moving simultaneously. The standard deviation variation is higher because the arms and the laptop (RF receiver) are combined in the same time and then multipath combinations effect is increased. In the case shown by Figure 9(b), the laptop is not moved and only arms are moved.

As shown in in Figure 9, an activity level of a person could be detected by choosing a threshold. The threshold of the STDEV would be a horizontal line under which no motion is detected. In counting the number of time the line is crossed, the velocity of motion could be given (slow or fast).

Those two parameters RSSI and STDEV could be advantageously combined in an engine decision maker that will output for example a notification or alert about abnormal indoor activity. If the beacon interval is not optimized for the activity speed recognition/detection the AP beacon interval parameter can be adjusted by sending from the mobile terminal to the residential gateway, to which it is wirelessly associated, a message to request a new beacon interval value.

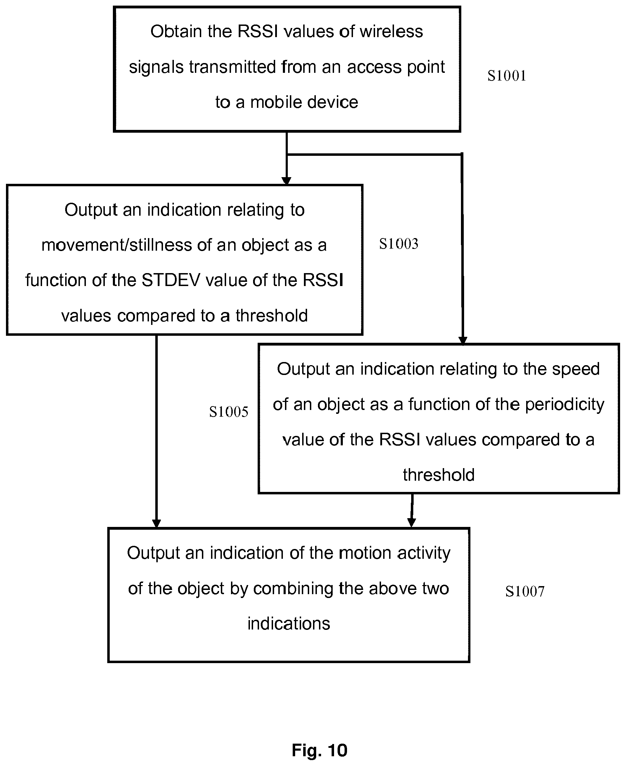

Figure 10 is a flowchart of a process for detecting a motion activity of an object according to an embodiment of the present disclosure.

The process shown in Figure 10 can be carried out on a mobile device side. But the result of the detection can be sent as a notification to any other connected devices through cellular network, WiFi, Bluetooth, etc. In this process, the gateway is used as the Transmitter/Tx part only.

At step S1001, it obtains the RSSI values of wireless signals which are transmitted from an access point (Gateway) to a mobile device.

The RSSI value of a wireless signal can be calculated during the preamble stage according to the 802.11 standard. The preamble is extracted from the PLCP (Physical Layer Convergence Protocol) preamble frame defined in the physical layer of the standard 802.11 and transmitted by the access point. The RXVECTOR_RSSI of the 802.11 a is a measure by the PHY sublayer of the energy observed at the antenna used to receive the current PPDU. RSSI is measured during the reception of the PLCP preamble

In one example, the object is a person in a room. The wireless signals are beacon frames which are transmitted by the access point. The beacon frames are transmitted periodically, for example, every 100ms so that the mobile device can calculate an RSSI value every 100ms. The calculation can be performed in a WiFi chipset receiver of the mobile device. Preferably the access point is positioned in the same room as the person to be detected so that the person can intercept a path of the WiFi signal. The RSSI value can be calculated based on the result of multipath combinations. Figure 5 shows the RSSI variation due to multipath effect of RF waves.

At step S1003, it calculates a first indication relating to the status of movement/stillness of an object as a function of the Standard Deviation (STDEV) value of the RSSI values of the wireless signals over a first threshold.

STDEV is a statistical parameter that represent the dispersion of the data value over time. A low standard deviation indicates that the data points tend to be close to the mean (also called the expected value) of the set, while a high standard deviation indicates that the data points are spread out over a wider range of values. Known algorithm can be used for calculating the STDEV value of the RSSI values of the wireless signals. No further details will be given.

The standard deviation of the RSSI values reflects a basic status of the object, like movement or stillness. The higher the standard deviation value, the higher the possibility of the movement of the object.

At step S1005, it calculates a second indication relating to the speed of movement of the object as a function of the number of times that the RSSI values cross a second threshold from down to up during a time period.

The above mentioned number of times can be obtained by averaging the RSSI values over time with a thresholding. The result can call a periodicity value of the RSSI values of the wireless signals over the second threshold. It can be appreciated that the averaging remove the noise superimposed to the data, which is a known mean to clean up the data and make highlight the periodicity. The periodicity is the expression of a recurrent phenomenon over time. In this example, the periodicity is based on the number of times the RSSI values will cross the second threshold from down to up during a time period, for example, 1 second.

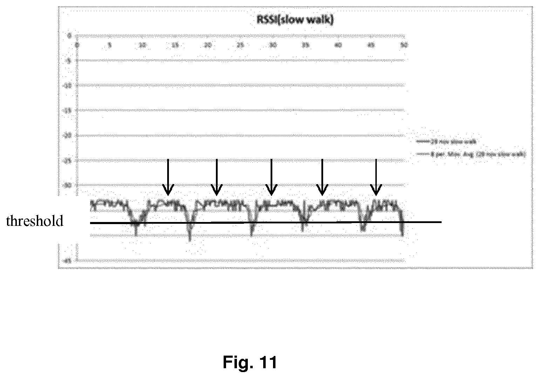

Figure 3 and 4 show an example of the results of averaging. Figure 11 is an exemplary diagram showing the process for calculating the periodicity value by averaging and thresholding. As shown in Figure 11, the RSSI values will cross the second threshold from down to up during a time period, 45 seconds in this example. Figure 11 shows that the second threshold is crossed 5 times over the time period of 45 seconds. Then the RSSI periodicity value can be expressed as 5/45.

At step S1007, it outputs a third indication of the motion activity of the object by combining the first and the second indications.

An example of the combining process is described as follows. After the RSSI values are acquired, the first indication based on the STDEV value is estimated to detect if there is motion or not. In the case the STDEV value is over a first threshold TH1 which indicates a motion is detected, the speed V1 is estimated based on the second indication described above during a first fixed period of time T. Then the indication of the motion activity of the object will contain the first indication relating to the status of movement/stillness of an object and the second indication relating to the speed of movement of the object.

In this example, beacon frames transmitted by the access point are used for the detection. The beaconing period can be adapted according to the variation of the periodicity of the RSSI values and the variation of STDEV of the RSSI values.

In an example, the adaption can be carried out by a decision engine which determines whether or not to change the beaconing interval over time. For example, if a first RSSI periodicity variation is detected and if the STDEV variation is varying, it means that a person may be moving faster than previously estimated. In this case, it may need to receive RSSI values more often for a more accurate detection based on the RSSI values. This can be achieved by reducing the beaconing interval. As the WiFi transmission is bi-directional, the mobile device can send a message to the access point to request reducing the beaconing interval, for example, from 100 ms to 20 ms.

In the above example of the combining process, after estimating the speed V1 under a beacon interval, a second speed estimation V2 is performed on the same duration of time T and then V2 is compared to V1. If V2 is superior to V1, it is considered by the decision engine that the object under tracking speed is increasing. In this case the beacon interval is decreased for example from 100 ms (default value) to 20 ms to get more often RSSI values in order to give a more accurate/fine object tracking. However if V2 is equal or Inferior to V1, a test can be made to get the inferiority ratio. If it is inferior within the 50% range, the beacon interval is kept unchanged. Otherwise it is increased for example from 100ms to 200 ms.

As an alternate solution to beacon interval increase, wireless traffic may also be solicited by sending data requests to the access point. A first solution is to send Probe Request as specified in IEEE802.11 standard. Probe requests are used to actively seek any, or a particular, access point. For example, a WiFi device can send a probe request to determine which access points are within the user range. For our needs, the smartphone addresses a Probe Request to the AP to force it to respond by a probe response. Another way to impact the data traffic from the access point is to emulate an access to its user interface by sending HTTP get requests. Indeed most of the access points have an HTTP server to provide a user control interface. Recurrent activities can be identified by analyzing the RSSI with fingerprinting techniques. We can observe on Figures 4, 5 and 8 that RSSI evolution over time may reveal user behavioral differences. Other features like RSSI standard deviation over time may be used to get a better velocity discrimination between activities, as illustrated in Figure 10.

For further data processing or for over time event retrieval, a log file of time stamped RSSI values capture could be implemented and accessible locally or remotely if localized on a cloud infrastructure.

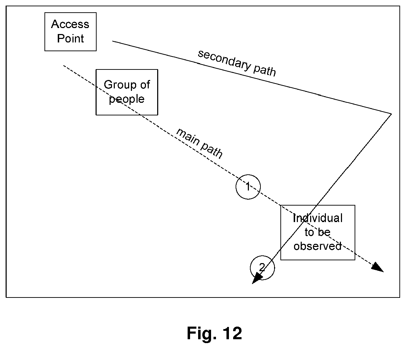

The following section will give an exemplary scenario from the application perspective that would be installed in a smartphone. It has to be noticed that a smartphone must capture the signal in the conditions which optimize the Signal/Noise ratio. Those conditions are determined by the position and the orientation of the mobile device. Then the user must be assisted in his sensor placement. Let's take a scenario where parents hosting a party want to take care of their baby sleeping in bedroom. The adults are in the living room where the access point used for measurement is placed. Figure 12 is an exemplary diagram showing a motion activity detection implemented on a mobile device.

The application invites the user to place his smartphone in a first arbitrary position. The user chooses the position 1 of the Figure 12. At this place, the RSSI signal varies dramatically since the group of adults interacts with the main path signal. By measuring this variation, the application is able to invite the user to place his smartphone in another place. The variation could correspond to the STDEV parameter.

After some iteration, the user places his smartphone in position 2 and the measurement is done to maximize interception of the object (individual to be observed) to sense with the secondary path (Rayleigh propagation model). The main path and secondary path must, of course, remain an abstraction for the user.

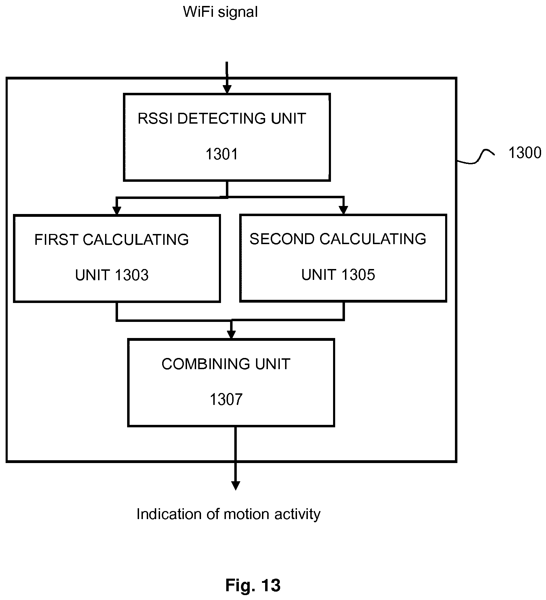

Figure 13 is an exemplary block diagram showing an apparatus for detecting a motion activity according to an embodiment of the present disclosure.

As shown in Figure 13, the input of the apparatus 1300 are wireless signals. In an embodiment, the apparatus 1300 can be implemented on a mobile device. In this case, the wireless signals can be WiFi signals transmitted from an access point.

The apparatus 1300 comprises a RSSI detecting unit 1301 for obtaining the RSSI values of wireless signals.

The apparatus 1300 further comprises a first calculating unit 1303 for calculating a first indication relating to the status of movement/stillness of an object as a function of the Standard Deviation (STDEV) value of the RSSI values of the wireless signals over a first threshold.

The apparatus 1300 further comprises a second calculating unit 1305 for calculating a second indication relating to the speed of movement of the object as a function of the number of times that the RSSI values cross a second threshold from down to up during a time period.

The apparatus 1300 further comprises a combining unit 1307 for outputting a third indication of the motion activity of the object by combining the first and the second indications.

The output of the apparatus 1300 is an indication of the motion activity of the object to be monitored. It can be appreciated that for purpose of the input and the output, the apparatus comprises a communication unit (not shown) for receiving and transmitting messages.

It is to be understood that the present disclosure may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1.  A method for calculating movement speed of an object, comprising, at a device:

    obtaining (S1001) RSSI values of wireless signals;
    calculating (S1005) an indication indicating the movement speed of the object based on number of times that the RSSI values cross a threshold during a time period.

2.  The method according to claim 1, wherein the wireless signals are in conformity with the WiFi standard.

3.  The method according to claim 1,wherein the wireless signals are beacon frames transmitted by an access point.

4.  The method according to claim 4, further comprising transmitting a message to the access point to reduce beaconing period of beacon frames when variation of periodicity of the RSSI values is detected and variation of standard deviation of the RSSI values is varying.

5.  The method according to any one of claims 1 to 4, further comprising receiving the wireless signals from a path which is intercepted by the object and a path which is not intercepted by the object.

6.  An apparatus (1300) for calculating movement speed of an object, comprising:

    an RSSI detecting unit (1301) for obtaining RSSI values of wireless signals;
    a calculating unit (1305) for calculating an indication indicating the movement speed of the object based on number of times that the RSSI values cross a threshold during a time period.

7.  The apparatus (1300) according to claim 6, wherein the wireless signals are in conformity with the WiFi standard.

8.  The apparatus (1300) according to claim 6, wherein the wireless signals are beacon frames transmitted by an access point.

9.  The apparatus (1300) according to claim 8, further comprising

    a communicating unit for transmitting a message to the access point to reduce beaconing period of beacon frames when variation of periodicity of the RSSI values is detected and variation of standard deviation of the RSSI values is varying.

10. Computer program product downloadable from a communication network and/or recorded on a medium readable by computer and/or executable by a processor, comprising program code instructions for implementing the steps of a method according to any one of claims 1 to 5.

11. Non-transitory computer-readable medium comprising a computer program product recorded thereon and capable of being run by a processor, including program code instructions for implementing the steps of a method according to any one of claims 1 to 5.

**Fig.1**

**Fig.2**

(a)

(b)

**Fig.3**

(a)

(b)

**Fig.4**

: Path intercepting the sensed user/object

: Other paths

**Fig.5**

**Fig.6**

(a)

(b)

**Fig.7**

**Fig.8**

(a)

(b)

**Fig.9**

Obtain the RSSI values of wireless
signals transmitted from an access point
to a mobile device

S1001

Output an indication relating to
movement/stillness of an object as a
function of the STDEV value of the RSSI
values compared to a threshold

S1003

Output an indication relating to the speed
of an object as a function of the periodicity
value of the RSSI values compared to a
threshold

S1005

Output an indication of the motion activity
of the object by combining the above two
indications

S1007

**Fig. 10**

threshold

**Fig. 11**

**Fig. 12**

WiFi signal

RSSI DETECTING UNIT

1301

1300

FIRST CALCULATING

UNIT 1303

SECOND CALCULATING

UNIT 1305

COMBINING UNIT

1307

Indication of motion activity

**Fig. 13**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/302712 A1 (ROSA FRANCESCANTONIO DELLA [FI] ET AL) 22 October 2015 (2015-10-22) * pages 2-3; figures 1-3 * | 1-11 | INV. G01S5/02 G01S11/02 |
| A | US 2008/112346 A1 (TOLPIN ALEXANDER [IL] ET AL) 15 May 2008 (2008-05-15) * abstract * | 1-11 | |
| X | WO 2016/066824 A1 (SIEMENS AG [DE]; SIEMENS SCHWEIZ AG [CH]) 6 May 2016 (2016-05-06) * pages 25-27; figure 2 * | 1-11 | |
| X | WO 2013/164628 A1 (UNIV ULSTER [GB]) 7 November 2013 (2013-11-07) * pages 1-2,6; figure 1 * | 1-11 | |
| X | US 2007/258420 A1 (ALIZADEH-SHABDIZ FARSHID [US] ET AL) 8 November 2007 (2007-11-08) * page 5; figure 4 * | 1-11 | TECHNICAL FIELDS SEARCHED (IPC) |
| A | US 6 052 598 A (RUDRAPATNA ASHOK N [US] ET AL) 18 April 2000 (2000-04-18) * page 4, line 38 - line 41 * | 4,9 | G01S H04W |

The present search report has been drawn up for all claims

| Place of search | Date of completion of the search | Examiner |
|---|---|---|
| Munich | 15 December 2017 | Ribbe, Jonas |

EPO FORM 1503 03.82 (P04C01)

**ANNEX TO THE EUROPEAN SEARCH REPORT
ON EUROPEAN PATENT APPLICATION NO.**

EP 17 18 2100

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2017

| Patent document cited in search report | | Publication date | Patent family member(s) | | Publication date |
|---|---|---|---|---|---|
| US 2015302712 | A1 | 22-10-2015 | EP 2915149 A1<br>US 2015302712 A1<br>WO 2014067586 A1 | | 09-09-2015<br>22-10-2015<br>08-05-2014 |
| US 2008112346 | A1 | 15-05-2008 | NONE | | |
| WO 2016066824 | A1 | 06-05-2016 | CN 107003397 A<br>CN 107110964 A<br>CN 107110965 A<br>EP 3186657 A1<br>EP 3186658 A1<br>EP 3186794 A1<br>US 2017309146 A1<br>US 2017343658 A1<br>WO 2016066820 A1<br>WO 2016066822 A1<br>WO 2016066824 A1 | | 01-08-2017<br>29-08-2017<br>29-08-2017<br>05-07-2017<br>05-07-2017<br>05-07-2017<br>26-10-2017<br>30-11-2017<br>06-05-2016<br>06-05-2016<br>06-05-2016 |
| WO 2013164628 | A1 | 07-11-2013 | NONE | | |
| US 2007258420 | A1 | 08-11-2007 | ES 2371782 T3<br>US 2007258420 A1 | | 10-01-2012<br>08-11-2007 |
| US 6052598 | A | 18-04-2000 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZENGBIN ZHANG ; DAVID CHU ; XIAOMENG CHEN ; THOMAS MOSCIBRODA.** Mobile Motion Gaming: Enabling a New Class of Phone-to-Phone Action Games on Commodity Phones. *Mobile Computing,* August 2013